# EUROPÄISCHE PATENTSCHRIFT

(11) **EP 1 565 348 B1**
(45) Veröffentlichungstag und Bekanntmachung des Hinweises auf die Patenterteilung: **02.01.2008**
(21) Anmeldenummer: 03788804.7
(22) Anmeldetag: 19.11.2003
(51) Int. Cl.: B60Q 5/00, B60R 21/20

(54) **ANORDNUNG ZUR HUPENBETÄTIGUNG AN LENKRÄDERN**
DEVICE FOR ACTUATING THE HORN ON STEERING WHEELS
SYSTEME D'ACTIONNEMENT D'AVERTISSEUR SONORE MONTE AU VOLANT

(30) Priorität: 27.11.2002 DE 20218554 U
(43) Veröffentlichungstag der Anmeldung: 24.08.2005
(73) Patentinhaber: Takata-Petri AG, 63743 Aschaffenburg (DE)
(72) Erfinder: SAKAGUCHI, Takashi, 63776 Mömbris (DE)
(74) Vertreter: Baumgärtel, Gunnar
(86) Internationale Anmeldenummer: PCT/DE2003/003864
(87) Internationale Veröffentlichungsnummer: WO 2004/048150

(56) Entgegenhaltungen:
- EP-A- 0 798 171
- EP-A- 1 251 043
- WO-A-98/42544
- DE-A- 10 052 386
- DE-A- 19 703 470

## Beschreibung

Die Erfindung betrifft eine Anordnung zur Hupenbetätigung an Lenkrädern nach dem Oberbegriff des Anspruchs 1.

Neben Lenkrädern mit axial bewegbaren Kontaktbrücken, an denen mindestens ein Kontakt vorgesehen ist, dem am Lenkradskelett ein fester Gegenkontakt zugeordnet ist, ist aus der WO 98/42544 ein Lenkrad bekannt, bei dem der bewegliche Kontakt am Generatorträger vorgesehen ist. Dieser ist an mindestens einem Abschnitt des Lenkrades befestigt, der in Richtung des zugehörigen Gegenkontaktes elastisch verformbar ist. Gegenüber der vorher genannten Anordnung wird bei diesem Lenkrad die Kontaktbrücke eingespart, so dass die Fertigungskosten reduziert sind. Der Nachteil besteht darin, dass diese Anordnung nur für modulintegrierte Lenkräder geeignet ist, d. h. für Lenkräder, bei denen die über der Airbageinheit liegende Airbagabdeckung Bestandteil des Lenkradkranzes ist. Weiterhin muss bei dieser Anordnung ein erheblicher Kraftaufwand zur Hupenbetätigung aufgebracht werden, da der elastische Abschnitt des Lenkrades wegen der Befestigungsfunktion für den Generatorträger nicht beliebig weich ausgeführt werden kann.

**Weiterhin ist aus der** DE-A-100 52 386 **ein Fahrzeuglenkrad bekannt, bei dem ein Schalter vorgesehen ist, der im Falle der Entfaltung des Airbags wegschwenkbar ist.**

Der Erfindung liegt die Aufgabe zugrunde, eine leicht betätigbare Anordnung zur Hupenbetätigung ohne Kontaktbrücke zu schaffen.

Erfindungsgemäß wird das gemäß den Merkmalen des Anspruchs 1 erreicht.

Bei einer Anordnung zur Hupenbetätigung an Lenkrädern mit einem Lenkradskelett und an diesem vorgesehenen mindestens einem festen Hupenkontakt sowie mit einem beweglichen Polsterträger bzw. Generatorträger und daran angeordnetem mindestens einem Hupenkontakt, der dem festen Hupenkontakt zugeordnet ist, ist erfindungsgemäß der Polsterträger bzw. der Generatorträger **zur Betätigung der Hupe** an einer Stelle schwenkbar auf dem Lenkradskelett gelagert. Infolge einer schwenkbaren Lagerung an nur einer Stelle besteht der Vorteil, dass der Polsterträger bzw. Generatorträger in einfacher Weise allseitig schwenkbar ausgebildet werden kann. Weiterhin ergeben sich wegen der einen Lagerstelle verringerte Fertigungskosten.

Vorzugsweise weist das Lenkradskelett eine gewölbte Lagerfläche auf, der mindestens ein Lagerelement am Polsterträger bzw. am Generatorträger zugeordnet ist. Diese Lagerart ist einfach und deshalb auch besonders kostengünstig.

Die gleichen Vorteile ergeben sich, wenn der Polsterträger bzw. der Generatorträger eine gewölbte Lagerfläche aufweist, der mindestens ein Lagerelement am Lenkradskelett zugeordnet ist.

Besonders vorteilhaft ist es, wenn die Lagerfläche so ausgebildet ist, dass sie vom Lagerelement umgreifbar ist, da dann an der Lagerstelle zusätzliche Halterungen entfallen können. Vorzugsweise ist die Lagerfläche als Kugelsegment ausgebildet. In einer bevorzugten Ausführungsform sind mehrere elastisch verformbare Lagersegmente, Z.B. drei Lagersegmente angeordnet.

Um das Aufsetzen der die Lagerfläche umgreifenden Lagersegmente auf die Lagerfläche zu erleichtern, weisen die Lagersegmente an den Enden ihrer Lagerfläche Aufsetzschrägen auf.

Die die Lagerfläche umgreifenden Lagerelemente sind an der Lagerfläche einrastbar gelagert, d.h., dass sie vollständig an der Lagerfläche anliegen. Um eine Demontage zu ermöglichen, ist es zweckmäßig, dass die Lagerelemente an der Lagerfläche auch ausrastbar gelagert sind.

Für die federnde Befestigung des Polsterträgers bzw. Generatorträgers ist mindestens ein in eine Öffnung des Lenkradskeletts eingreifender Haken vorgesehen und weiterhin ist mindestens eine Feder zwischen Lenkradskelett und Polsterträger bzw. Generatorträger vorgesehen.

Es ist zweckmäßig als Feder eine Druckfeder vorzusehen.

In einer Ausführungsform weist mindestens eine der Öffnungen für die Aufnahme von Haken einen breiten Abschnitt für das Einführen des Hakens und einen schmalen Abschnitt für die Arbeitsstellung des Hakens auf, wobei das Lagerelement in dieser Stellung auf die Lagerfläche aufsetzbar ist. Bei der Montage werden zunächst die Haken in den breiten Abschnitt der Öffnungen eingeführt und werden dann in den schmalen Abschnitt geschoben. Da in dieser Stellung das Lagerelement über der Lagerfläche liegt, kann das Lagerelement auf die Lagerfläche aufgedrückt werden.

In einer weiteren Ausführungsform ist vorgesehen, daß mindestens eine der Öffnungen für die Aufnahme von Haken mindestens einen keilförmigen Begrenzer für die Verhinderung des Zurückschiebens des Hakens nach der Einführung in die Öffnung aufweist.

Vorzugsweise sind drei Haken vorgesehen, die so angeordnet sind, daß sie in den Ecken eines gedachten Dreiecks liegen.

Die Lager können an unterschiedlichen Stellen angeordnet sein. So ist in einer Ausführungsform ein Lager vorgesehen, das in der Mitte zwischen zwei Öffnungen für die Haken zumindest annähernd auf der Verbindungslinie zwischen den beiden Öffnungen angeordnet ist. In einer anderen Ausführungsform ist ein Lager vorgesehen, das bei der Anordnung von drei Haken nahe der Öffnung für einen Haken angeordnet ist.

Der Polsterträger bzw. Generatorträger einschließlich des Lagerelements bzw. der Lagerfläche besteht zweckmäßig aus Kunststoff. Vorzugsweise besteht der Polsterträger bzw. Generatorträger aus 2-Komponentenkunststoff, wobei die erste Komponente eine Glasfaserverstärkung aufweist, während die zweite Komponente ohne Glasfaserverstärkung ausgeführt ist.

In einer Ausführungsform ist das Federelement zusammen mit der zweiten Komponente des Polsterträgers bzw. Generatorträgers einteilig ausgebildet.

Das Lenkradskelett besteht zumindest teilweise aus Leichtmetalldruckguß oder Kunststoff.

Die Erfindung soll in Ausführungsbeispielen anhand von Zeichnungen erläutert werden. Es zeigen:
- Fig. 1: ein Lenkrad mit schwenkbarem Polsterträger bzw. Generatorträger in der Draufsicht;
- Fig. 2: den Schnitt A-A gemäß Fig. 1;
- Fig. 3: den Schnitt B-B gemäß Fig. 1 mit der Anordnung zur Hupenbetätigung in der Neutralposition;
- Fig. 4: den Schnitt B-B gemäß Fig. 1 mit der Anordnung zur Hupenbetätigung in der Schwenkposition;
- Fig. 5: die schwenkbare Lagerung als Einzelheit;
- Fig. 6: den Schnitt C-C gemäß Fig. 5;
- Fig. 7: den rechten Abschnitt des Schnittes B-B gemäß Fig. 1 mit einer ersten Ausführungsform einer Druckfeder gemäß Fig. 3
- Fig. 8: den rechten Abschnitt des Schnittes B-B gemäß Fig. 1 mit einer zweiten Ausführungsform einer Druckfeder;
- Fig. 9: eine Draufsicht auf ein Lenkradskelett;
- Fig. 10: den Schnitt D-D der Fig. 9 mit dem Lager vor dem Einrasten der Lagerelemente;
- Fig. 11: den Schnitt D-D der Fig. 9 mit dem Lager nach dem Einrasten der Lagerelemente;
- Fig. 12: den Schnitt E-E der Fig. 9 mit einer Hakenstellung vor dem Einrasten der Lagerelemente;
- Fig. 13: den Schnitt F-F der Fig. 9 mit einer Hakenstellung nach dem Einrasten der Lagerelemente;
- Fig. 14: eine Draufsicht auf ein Lenkradskelett mit einer weiteren Ausführungsform der Lage des Schwenklagers;
- Fig. 15: den Schnitt G-G der Fig. 14 mit dem Lager vor dem Einrasten der Lagerelemente;
- Fig. 16: den Schnitt G-G der Fig. 14 mit dem Lager nach dem Einrasten der Lagerelemente;
- Fig. 17: den Schnitt H-H der Fig. 14 mit einer Hakenstellung vor dem Einrasten der Lagerelemente;
- Fig. 18: den Schnitt I-I der Fig.14 mit einer Hakenstellung nach dem Einrasten der Lagerelemente;
- Fig. 19: einen Ausschnitt des Lenkradskeletts in der Draufsicht mit einer Hakenöffnung mit Begrenzer in der Einführungsphase des Hakens;
- Fig. 20: den Ausschnitt nach Fig. 19 mit dem Haken in der Endstellung.

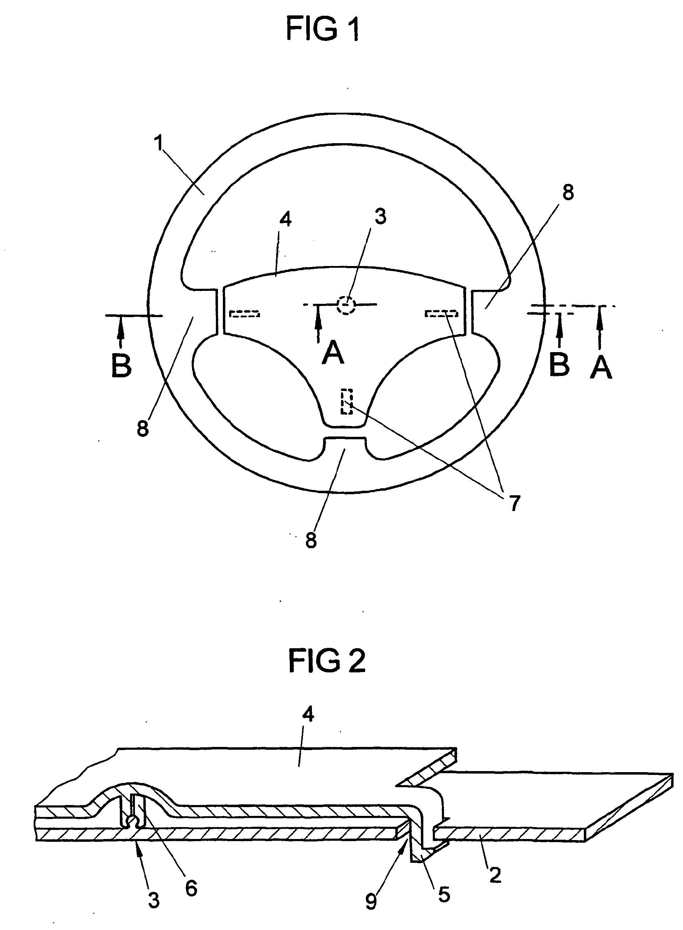

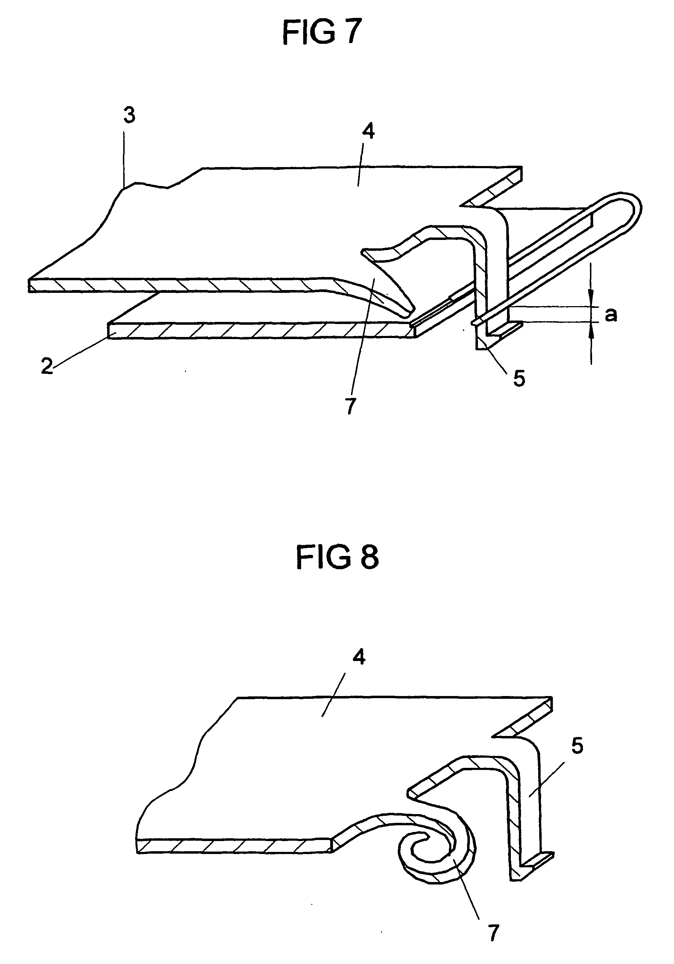

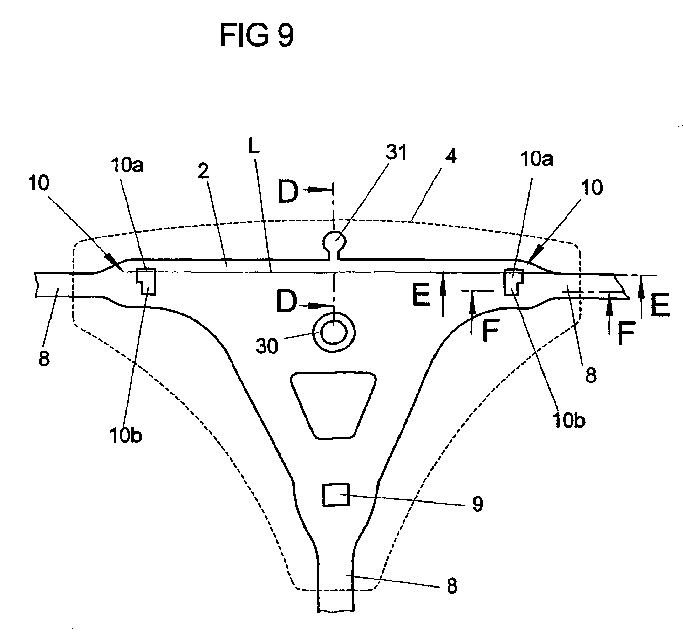

In der Fig. 1 ist ein Lenkrad 1 in der Draufsicht dargestellt, das ein Lenkradskelett 2 mit einem Schwenklager 3 für die Lagerung eines Polsterträgers bzw. Generatorträgers 4 aufweist (Fig. 2). Zur Vereinfachung der Beschreibung wird nachfolgend nur der Generatorträger benannt, wobei sich die Ausführungen in gleicher Weise auf den Polsterträger beziehen. Der Generatorträger 4 weist Haken 5 auf, die durch Öffnungen 9 bzw. 10 (Fig. 9) im Lenkradskelett 2 greifen. Zur Rückführung des Generatorträgers 4 in die Ausgangslage nach einem Hupvorgang sind Druckfedern 7 zwischen dem Lenkradskelett 2 und dem Generartorträger 4 angeordnet (Fig. 7). Der Generatorträger 4 erstreckt sich oberhalb der Speichen 8 des Lenkrades.

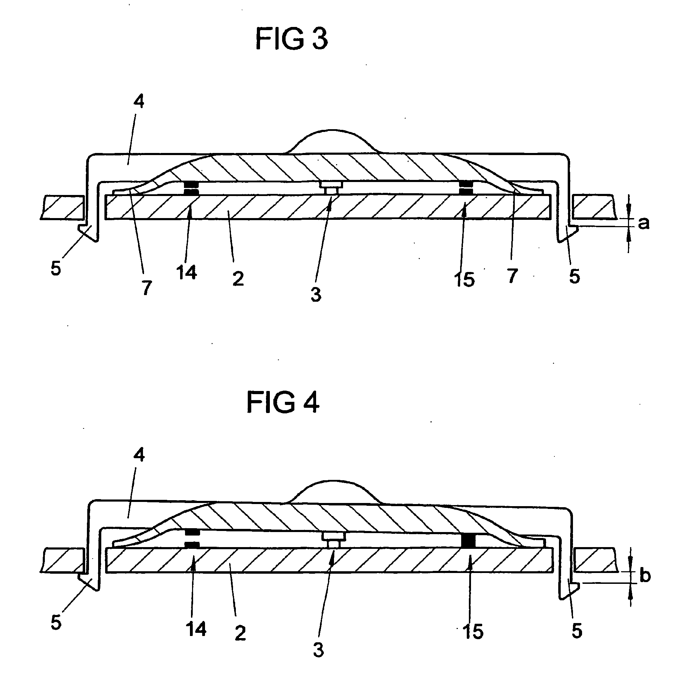

In dem in der Fig. 3 dargestellten Schnitt ist die Hupenanordnung in einen neutralen Position dargestellt, in der die durch die Öffnungen des Lenkradskeletts 2 greifenden Haken 5 des Generatorträgers 4 einen gleichen Abstand a zum Lenkradskelett haben. Weiterhin liegen sich Hupenkontakte 14, 15 im gleichen Abstand gegenüber. Bei Betätigung der Hupe liegt durch Schwenken des Generatorträgers 4 der in der Figur links liegende Haken 5 am Lenkradskelett 2 an, während sich der Abstand des rechtsliegenden Hakens 5 auf das Maß b vergrößert (Fig. 4). Die Hupenkontakte 15 liegen dann dicht aufeinander, während sich die Hupenkontakte 14 mit größerem Abstand gegenüberliegen.

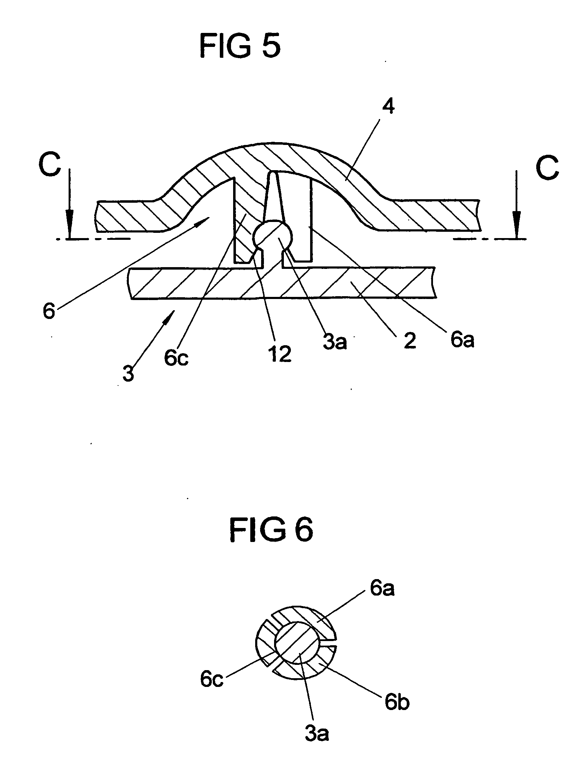

In den Figuren 5 und 6 ist das Schwenklager 3 als Einzelheit dargestellt. Das Lenkradskelett 2 weist eine Lagerfläche 3a auf, die die Form eines Kugelsegmentes hat. Dieser Lagerfläche ist das Lagerelement 6 am Generatorträger 4 zugeordnet, das drei elastisch verformbare Lagersegmente 6a, b, c aufweist, die die Lagerfläche 3a umgreifen. Zur leichteren Montage des Lagerelementes 6 weisen die Lagersegmente 6a, b, c an ihren Enden Aufsetzschrägen 12 auf und Lagerabschnitte, die der Kugelform der Lagerfläche 3a angepaßt sind. Die Lagersegmente werden bei der Montage auf die Lagerfläche aufgedrückt, bis sie diese umgreifen und mit ihren Lagerabschnitten an der Lagerfläche 3a anliegen und damit eingerastet sind. Eine Demontage ist bei dieser Anordnung möglich, indem die Lagersegmente von der Lagerfläche abgezogen werden.

In dem in der Fig. 7 dargestellten Schnitt ist eine Ausführungsform der Druckfeder dargestellt. Die Druckfeder 7 ist hier integraler Bestandteil des Generatorträgers 4, der aus elastisch verformbaren Kunststoff besteht. Die Druckfeder ist als schmale Zunge des Generatorträgers 4 ausgebildet, die schräg nach unten abgebogen ist. Der Generatorträger 4 ist hier in der Neutrallage dargestellt, in der zwischen dem Lenkradskelett 2 und dem Haken 5 das Spiel a vorhanden ist. Die Zunge liegt in dieser Neutrallage unter Vorspannung am Lenkradskelett an. Beim Niederdrücken verformt sich die Zunge elastisch, während sich die gegenüberliegende Zunge, wie aus der Fig. 3 ersichtlich ist, entspannt, aber immer noch am Lenkradskelett 2 anliegt.

In der Fig. 8 ist eine weitere Form der Druckfeder 7 dargestellt. Auch in dieser Ausführungsform ist die Druckfeder integraler Bestandteil des Generatorträgers 4. Die Druckfeder ist in dieser Ausführungsform spiralförmig ausgebildet, ebenfalls schräg nach unten abgebogen und liegt ebenfalls unter Vorspannung am Lenkradskelett 2 an, das in dieser Figur nicht dargesteltt ist.

Bei dem in der Fig. 9 in der Draufsicht dargestellten Lenkradskelett 2 ist das Schwenklager 31 in der Mitte zwischen den beiden Öffnungen 10 für zwei Haken 5 und etwa auf der Verbindungslinie L zwischen diesen beiden Öffnungen angeordnet. Die Öffnung 9 für einen weiteren Haken 5 ist ebenfalls in der Mitte zwischen den Öffnungen 10 angeordnet, aber so versetzt, daß die Öffnungen und damit auch die in sie eingreifenden Haken in den Ecken eines gedachten Dreiecks liegen. Jede Öffnung 10 weist einen breiten Abschnitt 10a für das Einführen der Haken 5 und einen schmalen Abschnitt 10b für die Endstellung der Haken 5 auf. Das Lenkradskelett 2 weist weiterhin eine Buchse 30 zur Aufnahme der nicht dargestellten Lenksäule auf.

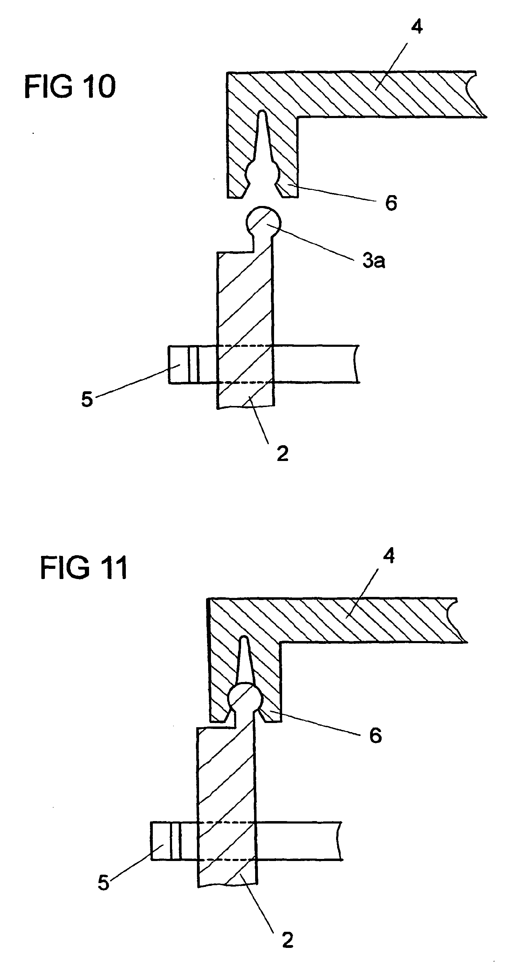

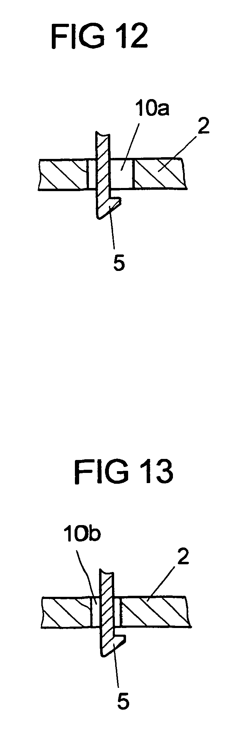

Bei der Montage werden zunächst die Haken 5 in die Abschnitte 10a der Öffnungen 10 eingeführt, wie es in Fig. 12 dargestellt ist, sowie in die Öffnung 9 eingeführt. Anschließend wird der Generatorträger 4 in Richtung der schmalen Abschnitte 10b verschoben. Damit sind die Haken in ihre Endstellung gebracht worden, wie es in Fig. 13 dargestellt ist und gleichzeitig befindet sich in dieser Stellung das Lagerelement 6 über der Lagerfläche 3a (Fig. 10). Anschließend wird das Lagerelement 6 auf die Lagerfläche 3a aufgedrückt, bis die in der Fig. 11 dargestellte Endstellung erreicht ist.

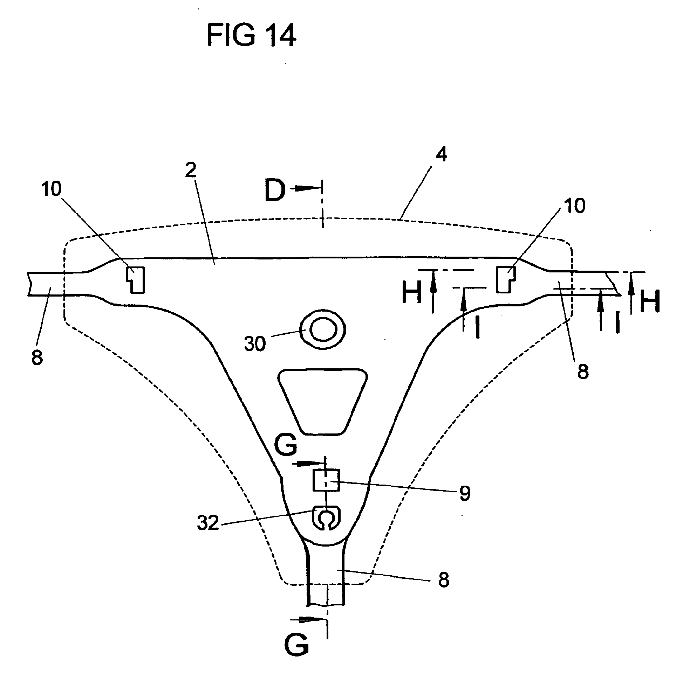

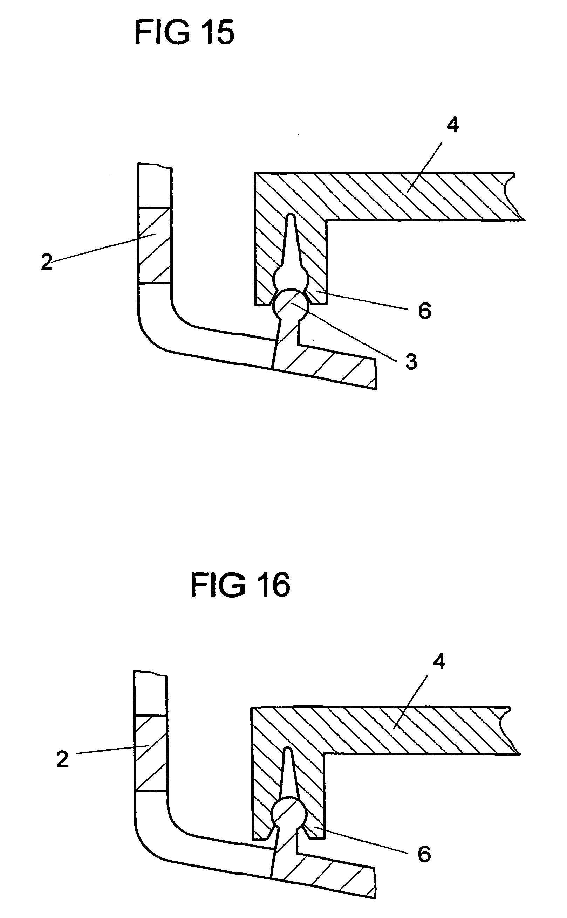

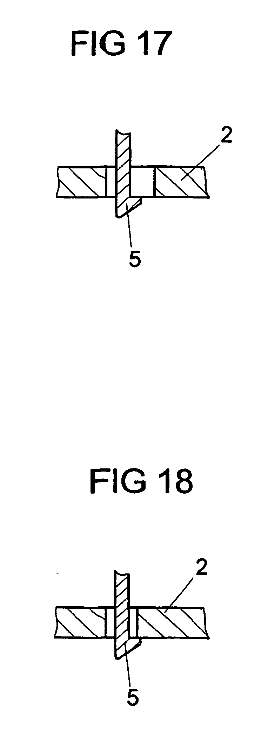

Beim Ausführungsbeispiel der Fig. 14 ist ein Schwenklager 32 ebenfalls in der Mitte zwischen den beiden Öffnungen 10 angeordnet. Im Unterschied zum Ausführungsbeispiel der Fig. 9 ist es aber nahe der Öffnung 9 angeordnet. Die Montage erfolgt in gleicher Weise.wie beim Ausführungsbeispiel der Fig. 9 und die einzelnen Phasen der Figuren 15 bis 18 entsprechen denen der Figuren 10 bis 13.

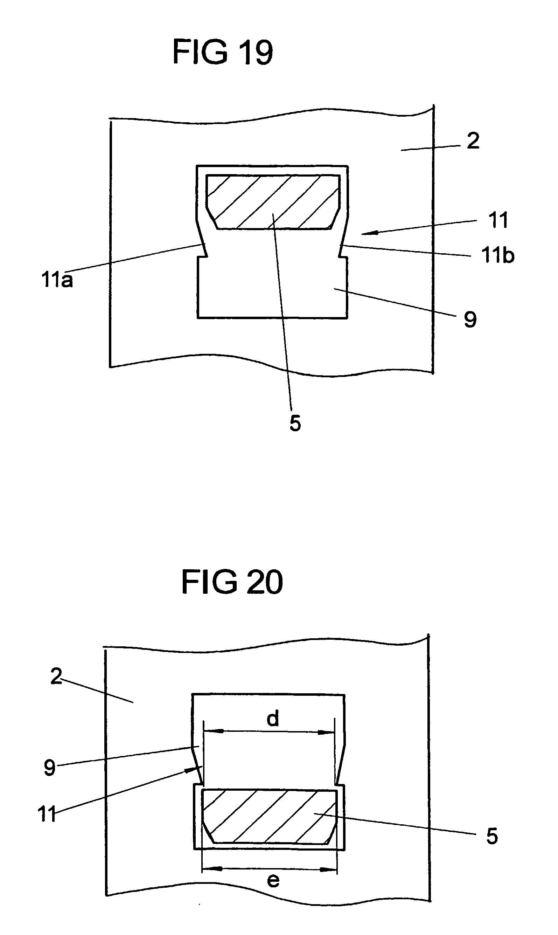

Während die Öffnungen 10 Abschnitte 10 a und 10b für das Einführen und für die Endstellung der Haken 5 aufweisen, ist in der Öffnung 9 ein Begrenzer 11 vorgesehen, der das Zurückschieben des Hakens 5 aus der Endstellung verhindert. Der Begrenzer 11 weist zwei gegenüberliegende Begrenzerabschnitte 11a, 11b auf, die keilförmig in die Öffnung 9 hineinragen. Dabei ist der Abstand d zwischen den Begrenzerabschnitten 11a, 11b kleiner als die Breite e des Hakens 5 (Fig. 20). In der Fig. 19 ist die Einführungsphase des Hakens dargestellt, in der sich die den Öffnungen 10 zugeordneten Haken 5 in den Abschnitten 10a befinden (Fig.12). Durch das Verschieben des Generatorträgers 4 wird der Haken 5, der der Öffnung 9 zugeordnet ist, über die elastisch verformbaren Begrenzerabschnitte 11a, 11b geschoben, bis er die in der Fig. 20 dargestellte Endstellung erreicht hat. In dieser Stellung befinden sich die den Öffnungen 10 zugeordneten Haken 5 ebenfalls in der Endlage (Fig. 13).

## Patentansprüche

1. Anordnung zur Hupenbetätigung an Lenkrädern (1) mit einem Lenkradskelett (2) und an diesem vorgesehenen mindestens einem festen Hupenkontakt sowie mit einem beweglichen Polsterträger bzw. Generatorträger (4) und daran angeordnetem mindestens einem Hupenkontakt, der dem festen Hupenkontakt zugeordnet ist,
**dadurch gekennzeichnet,**
**dass** der Polsterträger bzw. der Generatorträger (4) **zur Betätigung der Hupe** an einer Stelle schwenkbar auf dem Lenkradskelett (2) gelagert ist.

2. Anordnung nach Anspruch 1, **dadurch gekennzeichnet, daß** das Lenkradskelett (2) eine gewölbte Lagerfläche (3a) aufweist, der mindestens ein Lagerelement (6) am Polsterträger bzw. am Generatorträger (4) zugeordnet ist.

3. Anordnung nach Anspruch 1, **dadurch gekennzeichnet, daß** der Polsterträger bzw. der Generatorträger (4) eine gewölbte Lagerfläche aufweist, der mindestens ein Lagerelement am Lenkradskelett zugeordnet ist.

4. Anordnung nach mindestens einem der vorhergehenden Ansprüche, **dadurch gekennzeichnet, daß** die Lagerfläche (3a) so ausgebildet ist, daß sie vom Lagerelement (6) umgreifbar ist.

5. Anordnung nach mindestens einem der vorhergehenden Ansprüche, **dadurch gekennzeichnet, daß** die Lagerfläche (3a) als Kugelsegment ausgebildet ist.

6. Anordnung nach mindestens einem der vorhergehenden Ansprüche, **dadurch gekennzeichnet, daß** mehrere elastisch verformbare Lagersegmente (6a,b,c) angeordnet sind.

7. Anordnung nach Anspruch 6, **dadurch gekennzeichnet, daß** drei Lagersegmente (6a,b,c) angeordnet sind.

8. Anordnung nach Anspruch 6 oder 7, **dadurch gekennzeichnet, daß** die Lagersegmente (6a,b,c) an den Enden ihrer Lagerfläche Aufsetzschrägen (12) aufweisen.

9. Anordnung nach mindestens einem der vorhergehenden Ansprüche 2 bis 8, **dadurch gekennzeichnet, daß** die Lagerelemente (6) an der Lagerfläche (3a) einrastbar gelagert sind.

10. Anordnung nach mindestens einem der vorhergehenden Ansprüche 2 bis 9, **dadurch gekennzeichnet, daß** die Lagerelemente (6) an der Lagerfläche (3a) ausrastbar gelagert sind.

11. Anordnung nach mindestens einem der vorhergehenden Ansprüche, **dadurch gekennzeichnet, daß** für die federnde Befestigung des Polsterträgers bzw. Generatorträgers (4) mindestens ein in eine Öffnung (9, 10) des Lenkradskeletts (2) eingreifender Haken (5) vorgesehen ist und mindestens eine Feder (7) zwischen Lenkradskelett (2) und Polsterträger bzw. Generatorträger (4) vorgesehen ist.

12. Anordnung nach Anspruch 11, **dadurch gekennzeichnet, daß** als Feder eine Druckfeder (7) vorgesehen ist.

13. Anordnung nach Anspruch 11 oder 12, **dadurch gekennzeichnet, daß** mindestens eine der Öffnungen (10) für die Aufnahme von Haken (5) einen breiten Abschnitt (10a) für das Einführen des Hakens (5) und einen schmalen Abschnitt (10b) für die Endstellung des Hakens (5) aufweist, wobei das Lagerelement (6) in dieser Stellung auf die Lagerfläche (3a) aufsetzbar ist.

14. Anordnung nach mindestens einem der Ansprüche 11 bis 13, **dadurch gekennzeichnet, daß** mindestens eine der Öffnungen (9) für die Aufnahme eines Hakens (5) mindestens einen keilförmigen Begrenzer (11) für die Verhinderung des Zurückschiebens des Hakens (5)nach der Einführung in die Öffnung (9) aufweist.

15. Anordnung nach mindestens einem der Ansprüche 11 bis 14, **dadurch gekennzeichnet, daß** drei Haken (5) vorgesehen sind, die so angeordnet sind, daß sie in den Ecken eines gedachten Dreiecks liegen.

16. Anordnung nach mindestens einem der Ansprüche 11 bis 15, **dadurch gekennzeichnet, daß** ein Lager (31) vorgesehen ist, das in der Mitte zwischen zwei Öffnungen (10) für die Haken (5) zumindest annähernd auf der Verbindungslinie (L) zwischen den beiden Öffnungen angeordnet ist.

17. Anordnung nach mindestens einem der Ansprüche 11 bis 15, **dadurch gekennzeichnet, daß** ein Lager vorgesehen ist, das bei der Anordnung von drei Haken (5) nahe der Öffnung (9) für einen Haken angeordnet ist.

18. Anordnung nach mindestens einem der vorhergenden Ansprüche, **dadurch gekennzeichnet, daß** der Polsterträger bzw. Generatorträger (4) einschließlich des Lagerelements bzw. der Lagerfläche aus Kunststoff besteht.

19. Anordnung nach Anspruch 18, **dadurch gekennzeichnet, daß** der Polsterträger bzw. Generatorträger (4) aus 2-Komponentenkunststoff besteht, wobei die erste Komponente eine Glasfaserverstärkung aufweist, während die zweite Komponente ohne Glasfaserverstärkung ausgeführt ist.

20. Anordnung nach mindestens einem der Ansprüche 11 bis 19, **dadurch gekennzeichnet, daß** das Federelement (7) zusammen mit der zweiten Komponente des Polsterträgers bzw. Generatorträgers (4) einteilig ausgebildet ist.

21. Anordnung nach mindestens einem der vorhergehenden Ansprüche, **dadurch gekennzeichnet, daß** das Lenkradskelett (2) zumindest teilweise aus Leichtmetalldruckguß besteht.

22. Anordnung nach mindestens einem der vorhergehenden Ansprüche, **dadurch gekennzeichnet, daß** das Lenkradskelett (2) zumindest teilweise aus Kunststoff besteht.

## Claims

1. An arrangement for actuating the horn on steering wheels (1), having a steering wheel frame (2) and at least one fixed horn contact provided thereon and also having a moveable padded support or generator support (4) and at least one horn contact which is arranged thereon and is assigned to the fixed horn contact,
**characterized in that**
the padded support or the generator support (4) is, for actuating the horn, mounted on the steering wheel frame (2) in a manner such that it can be pivoted at one location.

2. The arrangement as claimed in claim 1, **characterized in that** the steering wheel frame (2) has a curved bearing surface (3a) which is assigned at least one bearing element (6) on the padded support or on the generator support (4).

3. The arrangement as claimed in claim 1, **characterized in that** the padded support or the generator support (4) has a curved bearing surface which is assigned at least one bearing element on the steering wheel frame.

4. The arrangement as claimed in at least one of the preceding claims, **characterized in that** the bearing surface (3a) is designed in such a manner that it can be engaged around by the bearing element (6).

5. The arrangement as claimed in at least one of the preceding claims, **characterized in that** the bearing surface (3a) is designed as a spherical segment.

6. The arrangement as claimed in at least one of the preceding claims, **characterized in that** there are a plurality of elastically deformable bearing segments (6a,b,c).

7. The arrangement as claimed in claim 6, **characterized in that** there are three bearing segments (6a,b,c).

8. The arrangement as claimed in claim 6 or 7, **characterized in that** the bearing segments (6a,b,c) have placing-on slopes (12) at the ends of their bearing surface.

9. The arrangement as claimed in at least one of the preceding claims 2 to 8, **characterized in that** the bearing elements (6) are mounted on the bearing surface (3a) in a manner such that they can be snapped into place.

10. The arrangement as claimed in at least one of the preceding claims 2 to 9, **characterized in that** the bearing elements (6) are mounted on the bearing surface (3a) in a manner such that they can be disengaged.

11. The arrangement as claimed in at least one of the preceding claims, **characterized in that** at least one hook (5) engaging in an opening (9, 10) of the steering wheel frame (2) is provided for the resilient fastening of the padded support or generator support (4), and at least one spring (7) is provided between the steering wheel frame (2) and padded support or generator support (4).

12. The arrangement as claimed in claim 11, **characterized in that** a compression spring (7) is provided as the spring.

13. The arrangement as claimed in claim 11 or 12, **characterized in that** at least one of the openings (10) for receiving hooks (5) has a wide section (10a) for the introduction of the hook (5) and a narrow section (10b) for the final position of the hook (5), it being possible for the bearing element (6) to be placed onto the bearing surface (3a) in this position.

14. The arrangement as claimed in at least one of claims 11 to 13, **characterized in that** at least one of the openings (9) for receiving a hook (5) has at least one wedge-shaped limiter (11) for preventing the hook (5) from sliding back after being introduced into the opening (9).

15. The arrangement as claimed in at least one of claims 11 to 14, **characterized in that** three hooks (5) are provided which are arranged in such a manner that they are situated in the corners of an imaginary triangle.

16. The arrangement as claimed in at least one of claims 11 to 15, **characterized in that** a bearing (31) is provided which is arranged in the center between two openings (10) for the hooks (5) at least approximately on the connecting line (L) between the two openings.

17. The arrangement as claimed in at least one of claims 11 to 15, **characterized in that** a bearing is provided which, in the case of the arrangement of three hooks (5), is arranged close to the opening (9) for one hook.

18. The arrangement as claimed in at least one of the preceding claims, **characterized in that** the padded support or generator support (4) including the bearing element or the bearing surface consists of plastic.

19. The arrangement as claimed in claim 18, **characterized in that** the padded support or generator support (4) consists of 2-component plastic, the first component having a glass fiber reinforcement while the second component is designed without a glass fiber reinforcement.

20. The arrangement as claimed in at least one of claims 11 to 19, **characterized in that** the spring element (7) together with the second component of the padded support or generator support (4) is of single-part design.

21. The arrangement as claimed in at least one of the preceding claims, **characterized in that** the steering wheel frame (2) at least partially consists of light metal die casting.

22. The arrangement as claimed in at least one of the preceding claims, **characterized in that** the steering wheel frame (2) at least partially consists of plastic.

## Revendications

1. Dispositif d'actionnement d'avertisseur sonore au volant (1) avec une ossature de volant (2) et au moins un contact d'avertisseur sonore fixe prévu sur ladite ossature, ainsi qu'avec un support de coussin et/ou support de générateur (4) mobile et au moins un contact d'avertisseur sonore disposé dessus, ledit contact étant attribué au contact d'avertisseur sonore fixe, **caractérisé en ce que** le support de coussin et/ou le support de générateur (4) est logé pivotant à un endroit sur l'ossature du volant (2) pour actionner l'avertisseur sonore.

2. Dispositif selon la revendication 1, **caractérisé en ce que** l'ossature de volant (2) comporte une surface d'appui bombée (3a), sur laquelle est disposé au moins un élément de palier (6) au niveau du support de coussin et/ou du support de générateur (4).

3. Dispositif selon la revendication 1, **caractérisé en ce que** le support de coussin et/ou le support de générateur (4) comporte une surface d'appui bombée, sur laquelle est disposé au moins un élément de palier au niveau de l'ossature du volant.

4. Dispositif selon au moins l'une quelconque des revendications précédentes, **caractérisé en ce que** la surface d'appui (3a) est formée de telle sorte qu'elle peut être entourée par l'élément de palier (6).

5. Dispositif selon au moins l'une quelconque des revendications précédentes, **caractérisé en ce que** la surface d'appui (3a) est formée comme segment sphérique.

6. Dispositif selon au moins l'une quelconque des revendications précédentes, **caractérisé en ce que** plusieurs segments de palier (6a, b, c) déformables élastiquement sont disposés.

7. Système selon la revendication 6, **caractérisé en ce que** trois segments de palier (6a, b, c) sont disposés.

8. Dispositif selon la revendication 6 ou 7, **caractérisé en ce que** les segments de palier (6a, b, c) comportent des chanfreins de pose (12) aux extrémités de leur surface d'appui.

9. Dispositif selon au moins l'une quelconque des revendications précédentes 2 à 8, **caractérisé en ce que** les éléments de palier (6) sont logés, de manière à pouvoir s'encliqueter, sur la surface d'appui (3a).

10. Dispositif selon au moins l'une quelconque des revendications précédentes 2 à 9, **caractérisé en ce que** les éléments de palier (6) sont logés, de manière à pouvoir se dégager, sur la surface d'appui (3a).

11. Dispositif selon au moins l'une quelconque des revendications précédentes, **caractérisé en ce que** pour la fixation élastique du support de coussin et/ou du support de générateur (4), au moins un crochet (5) engrenant dans une ouverture (9, 10) de l'ossature du volant (2) est prévu et au moins un ressort (7) est prévu entre l'ossature de volant (2) et le support de coussin et/ou le support de générateur (4).

12. Dispositif selon la revendication 11, **caractérisé en ce qu'**un ressort de pression (7) est prévu comme ressort.

13. Dispositif selon la revendication 11 ou 12, **caractérisé en ce qu'**au moins une des ouvertures (10) pour la réception de crochets (5) comporte une section large (10a) pour l'introduction du crochet (5) et une section étroite (10b) pour la position finale du crochet (5), l'élément de palier (6) pouvant être posé dans cette position sur la surface d'appui (3 a).

14. Système selon au moins l'une quelconque des revendications 11 à 13, **caractérisé en ce qu'**au moins une des ouvertures (9) pour la réception d'un crochet (5) comporte au moins un limiteur (11) cunéiforme pour empêcher le recul du crochet (5) après l'introduction dans l'ouverture (9).

15. Dispositif selon au moins l'une quelconque des revendications 11 à 14, **caractérisé en ce qu'**il est prévu trois crochets (5) qui sont disposés de telle façon qu'ils se situent dans les angles d'un triangle imaginaire.

16. Dispositif selon au moins l'une quelconque des revendications 11 à 15, **caractérisé en ce qu'**il est prévu un palier (31) lequel est disposé au milieu entre deux ouvertures (10) pour les crochets (5) au moins approximativement sur la ligne de jonction (L) entre les deux ouvertures.

17. Dispositif selon au moins l'une quelconque des revendications 11 à 15, **caractérisé en ce qu'**il est prévu un palier qui est disposé dans le système à trois crochets (5) à proximité de l'ouverture (9) pour un crochet.

18. Dispositif selon au moins l'une quelconque des revendications précédentes, **caractérisé en ce que** le support de coussin et/ou le support de générateur (4) y compris l'élément de palier et/ou la surface d'appui, est en matière plastique.

19. Dispositif selon la revendication 18, **caractérisé en ce que** le support de coussin et/ou le support de générateur (4) est en matière plastique à deux composants, le premier composant comportant un renforcement de fibres de verre, tandis que le second composant est conçu sans renforcement de fibres de verre.

20. Dispositif selon au moins l'une quelconque des revendications 11 à 19, **caractérisé en ce que** l'élément élastique (7) est formé d'une seule pièce conjointement avec le second composant du support de coussin et/ou du support de générateur (4).

21. Dispositif selon au moins l'une quelconque des revendications précédentes, **caractérisé en ce que** l'ossature de volant (2) se compose au moins en partie de métal léger coulé sous pression.

22. Dispositif selon au moins l'une quelconque des revendications précédentes, **caractérisé en ce que** l'ossature de volant (2) se compose au moins partiellement de matière plastique.
